# EUROPEAN PATENT APPLICATION

(11) **EP 4 400 982 A1**
(43) Date of publication of application: **17.07.2024**
(21) Application number: 23211388.6
(22) Date of filing: 22.11.2023
(51) Int. Cl.: G06F 16/215, G06F 16/22, G06F 16/23

(54) **METHOD AND APPARATUS FOR PROCESSING PHOTOVOLTAIC DATA, AND SYSTEM FOR MANAGING PHOTOVOLTAIC DATA**

(30) Priority: 16.01.2023 CN 202310067393
(71) Applicant: Sungrow Power Supply (Nanjing) Co., Ltd, Nanjing, Jiangsu 210012 (CN)
(72) Inventor: Xiong, Zhenhai, Nanjing, 210012 (CN)
(74) Representative: Epping - Hermann - Fischer

(57) **Abstract**

A method and an apparatus for processing photovoltaic data, and a system for managing photovoltaic data are provided, which relates to the field of data processing technology. The method includes: generating request identification metadata for starting a current data write transaction based on a current time when it is determined that a previous data write transaction is successfully executed; writing to-be-written photovoltaic data in the current data write transaction into a row storage format file in a row storage format based on the request identification metadata; merging the photovoltaic data in the row storage format file into a column storage format file in a column storage mode when it is determined that an amount of data written in the row storage format exceeds a target data amount threshold, where the row storage format file and the column storage format file are used for data query.

## Description

### TECHNICAL FIELD

The present disclosure relates to the field of data processing technology, in particular to a method and an apparatus for processing photovoltaic data, and a system for managing photovoltaic data.

### BACKGROUND

As photovoltaic power generation has significant energy efficiency, environmental protection effect, and economic benefits, the photovoltaic industry has become a technology that is widely developed and applied in the world. With the development of the photovoltaic industry, the amount of photovoltaic data has significantly increased, and the amount of data accessed by some photovoltaic cloud systems has exceeded the order of million. How to quickly process photovoltaic data has become an urgent problem to be solved in the photovoltaic field.

Currently, photovoltaic data is mainly processed through big data processing and analysis. However, a traditional big data database often requires a manual data merging operation due to a timing error or data updating caused by supplementary transmission and time zone issues. This is time-consuming and cannot automatically perceive whether the data needs to be updated.

### SUMMARY OF THE INVENTION

The present disclosure aims to solve at least one of the technical problems in the conventional technology. Therefore, a method and an apparatus for processing photovoltaic data, and a system for managing photovoltaic data are provided according to the present disclosure, to achieve the automatic merging operation of the updated data, improving the efficiency and intelligence of processing the photovoltaic data.

In a first aspect, a method for processing photovoltaic data is provided according to the present disclosure. The method includes:
generating request identification metadata for starting a current data write transaction based on a current time when it is determined that a previous data write transaction is successfully executed;
writing to-be-written photovoltaic data in the current data write transaction into a row storage format file in a row storage format based on the request identification metadata; and
merging the photovoltaic data in the row storage format file into a column storage format file in a column storage mode when it is determined that an amount of data written in the row storage format exceeds a target data amount threshold, where the row storage format file and the column storage format file are used for data query.

With the method for processing photovoltaic data according to the present disclosure, the written data is automatically filtered according to the timeline, and only the latest written data is retained. The written photovoltaic data is first written in the row storage format, in order to reduce the writing cost. The row storage format file is regularly merged into the column storage format file based on the target data amount threshold to achieve the automatic merging operation of the updated data, improving the efficiency and intelligence of processing the photovoltaic data, and also improving data query efficiency.

According to an embodiment of the present disclosure, the writing to-be-written photovoltaic data in the current data write transaction into a row storage format file in a row storage format based on the request identification metadata may include:
performing a data deduplication process on the to-be-written photovoltaic data based on the request identification metadata;
determining a target file path corresponding to the to-be-written photovoltaic data based on a rowkey of the request identification metadata; and
writing the to-be-written photovoltaic data into the row storage format file in the row storage format based on the target file path.

According to an embodiment of the present disclosure, before performing a data deduplication process on the to-be-written photovoltaic data based on the request identification metadata, the method may further include:
constructing an resilient distributed dataset object based on the request identification metadata, where the resilien distributed dataset object may be used for performing a deduplication process and a merge process on the to-be-written photovoltaic data.

According to an embodiment of the present disclosure, after the writing to-be-written photovoltaic data in the current data write transaction into a row storage format file in a row storage format based on the request identification metadata, and before the merging the photovoltaic data in the row storage format file into a column storage format file in a column storage mode, the method may further include:
generating a commit type file in metadata of the to-be-written photovoltaic data, where the commit type file is provided for a data query engine to perform data query.

According to an embodiment of the present disclosure, after the merging the photovoltaic data in the row storage format file into a column storage format file in a column storage mode, the method may further include:
synchronizing the row storage format file and the column storage format file to query engine metadata, where the query engine metadata is provided for a data query engine to perform data query.

According to an embodiment of the present disclosure, before the generating request identification metadata for starting a current data write transaction, the method may further include:
performing a rollback operation when it is determined that the previous data write transaction fails.

In a second aspect, an apparatus for processing photovoltaic data is provided according to the present disclosure. The apparatus includes:
a first processing module configured to generate request identification metadata for starting a current data write transaction based on a current time when it is determined that a previous data write transaction is successfully executed;
a second processing module configured to write to-be-written photovoltaic data in the current data write transaction into a row storage format file in a row storage format based on the request identification metadata; and
a third processing module configured to merge the photovoltaic data in the row storage format file into a column storage format file in a column storage mode when it is determined that an amount of data written in the row storage format exceeds a target data amount threshold, where the row storage format file and the column storage format file are used for data query.

With the apparatus for processing photovoltaic data according to the present disclosure, the written data is automatically filtered according to the timeline, and only the latest written data is retained. The written photovoltaic data is first written in the row storage format, in order to reduce the writing cost. The row storage format file is regularly merged into the column storage format file based on the target data amount threshold, to achieve the automatic merging operation of the updated data, improving the efficiency and intelligence of processing the photovoltaic data, and also improving data query efficiency.

In a third aspect, a system for managing photovoltaic data is provided according to the present disclosure. The system includes:
a transaction receiving module configured to receive a data writing transaction sent by a client, where the data writing transaction includes to-be-written photovoltaic data; and
a data writing module connected to the transaction receiving module, where the data writing module is configured to process the to-be-written photovoltaic data based on the method for processing photovoltaic data as described in the first aspect above.

In a fourth aspect, an electronic device is provided according to the present disclosure, including a memory, a processor and a computer program stored in the memory and executable by the processor. The program, when executed by the processor, implements the method for processing photovoltaic data as described in the first aspect above.

In a fifth aspect, a non-transitory computer-readable storage medium storing a computer program is provided according to the present disclosure. The computer program, when executed by a processor, implements the method for processing photovoltaic data as described in the first aspect above.

In a sixth aspect, a computer program product including a computer program is provided according to the present disclosure. The computer program, when executed by a processor, implements the method for processing photovoltaic data as described in the first aspect above.

Some other aspects and advantages are set forth in the description below, and some other aspects and advantages will become apparent from the description below, or may be learned from practice of the present disclosure.

### BRIEF DESCRIPTION OF THE DRAWINGS

The above and/or additional aspects and advantages of the present disclosure will become apparent and readily understood from the following description of embodiments in conjunction with the accompanying drawings, in which:
Figure 1 is a first schematic flowchart of a method for processing photovoltaic data according to an embodiment of the present disclosure;
Figure 2 is a second schematic flowchart of a method for processing photovoltaic data according to an embodiment of the present disclosure;
Figure 3 is a schematic structural diagram of an apparatus for processing photovoltaic data according to an embodiment of the present disclosure;
Figure 4 is a schematic structural diagram of a system for managing photovoltaic data according to an embodiment of the present disclosure; and
Figure 5 is a schematic structural diagram of an electronic device according to an embodiment of the present disclosure.

### DETAILED DESCRIPTION OF THE EMBODIMENTS

Technical solutions in the embodiments of the present disclosure are clearly described below in conjunction with the drawings of the embodiments of the present disclosure. Apparently, the embodiments described hereinafter are only some embodiments of the present disclosure, rather than all of the embodiments. All other embodiments obtained by persons skilled in the art based on the embodiments of the present disclosure shall fall within the protection scope of the present disclosure.

In the specification and the claims of the present disclosure, the terms "first", "second", and so on are included to differentiate similar objects but do not necessarily indicate a specific order or sequence. It should be understood that the data used in this way can be interchanged in appropriate cases, so that the embodiments of the present disclosure can be implemented in order other than those illustrated or described here. Moreover, the objects distinguished by the terms "first", "second", etc. are usually of the same class and the terms "first", "second", etc. do not limit the number of objects. For example, a first object may be one or multiple objects. In addition, in the specification and the claims, the term "and/or" represents at least one of the connected objects, and the character "/" generally indicates that the related objects before and after the "/" are in an "or" relationship.

A method for processing photovoltaic data, an apparatus for processing photovoltaic data, a system for managing photovoltaic data, an electronic device, and a readable storage medium of the present disclosure will be described in detail below through specific embodiments and application scenarios in combination with the accompanying drawings.

The method for processing photovoltaic data can be applied to a terminal, and can be executed by a hardware or software of the terminal.

The terminal includes but is not limited to a portable communication device such as a mobile phone or a tablet with a touch sensitive surface (such as a touch screen display and/or a touchpad). It should also be understood that in some embodiments, the terminal may not be a portable communication device, but a desktop computer with a touch sensitive surface (such as a touch screen display and/or a touchpad).

In the following embodiments, a terminal including a display and a touch sensitive surface is described. However, it should be understood that the terminal may include one or more other physical user interface devices such as a physical keyboard, a mouse, and a joystick.

In the method for processing photovoltaic data according to the embodiments of the present disclosure, an executive body for executing the method for processing photovoltaic data may be an electronic device or a functional module or a functional entity in the electronic device that can implement the method for processing photovoltaic data. The electronic device mentioned in the embodiments of present disclosure include but is not limited to a mobile phone, a tablet, a computer, a camera, a wearable device, etc. The method for processing photovoltaic data according to the embodiments of the present disclosure will be described by using an example in which the electronic device is the executing body.

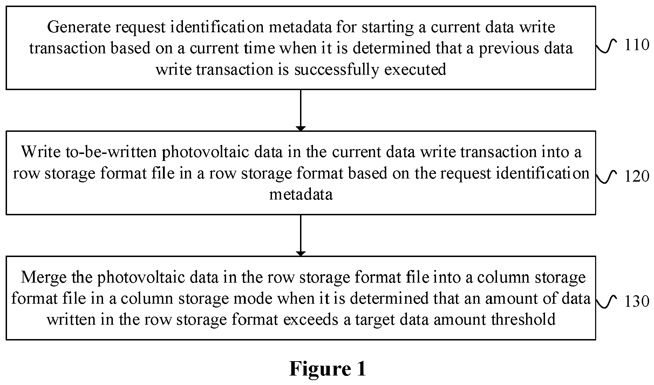

As shown in Figure 1, the method for processing photovoltaic data includes step 110, step 120, and step 130.

In step 110, when it is determined that a previous data write transaction is successfully executed, request identification metadata for starting a current data write transaction is generated based on a current time.

It should be noted that rapidly-updated massive photovoltaic data can be written and stored to a data warehouse by executing multiple data write transactions.

In this step, when it is determined that the previous data write transaction has been successfully executed, that is, the photovoltaic data in the previous data write transaction has been written and stored, the request identification metadata for starting the current data write transaction is generated based on the current time.

The request identification metadata is the metadata for identifying a start of the current data write transaction. The request identification metadata generated based on the current time carries time information on the current time, providing a timeline service for the writing of the photovoltaic data. The written data is automatically filtered according to the timeline, and only the latest written data is retained, achieving the effect of big data ACID.

ACID refers to four characteristics of atomicity, consistency, isolation, and durability of a data warehouse to ensure the correctness and reliability of a transaction during the process of writing or updating data.

In Step 120, to-be-written photovoltaic data in the current data write transaction is written into a row storage format file in a row storage format based on the request identification metadata.

The current data write transaction is started based on the request identification metadata, so that the to-be-written photovoltaic data in the current data write transaction is written into the row storage format file in the row storage format.

The to-be-written photovoltaic data in the current data write transaction may be newly inserted photovoltaic data or upserted (i.e., updated and inserted) photovoltaic data. The row storage format file may be a log file.

It should be noted that, by writing the data in the row storage format, there is less intrusion into data that has already been written to the data warehouse before the current data write transaction. In practices, the execution of the current data write transaction can be achieved by adding ajar package without restarting a service.

In Step 130, when it is determined that an amount of data written in the row storage format exceeds a target data amount threshold, the photovoltaic data in the row storage format file is merged into a column storage format file in a column storage mode. The row storage format file and the column storage format file are used for data query.

In executing the current data write transaction, the to-be-written photovoltaic data is first written into the row storage format file in the row storage format. When an amount of data written in the row storage format exceeds the target data amount threshold, the row storage format file is merged into the column storage format file.

The column format file may be a parquet file.

In this embodiment, the target data amount threshold is a preset critical value for the amount of data. In the process of writing into the data warehouse, the to-be-written photovoltaic data is first written in the row storage format, and the data written in the row storage format is automatically merged into the column storage format when reaching the target data amount threshold, so that the log file is periodically merged into the parquet file to complete the current data write transaction.

In practices, when reading the written photovoltaic data, the log file may be merged with the parquet file to obtain complete data and then the complete data is returned to a front end. Alternatively, the log file may be ignored and only the parquet file is returned to greatly improve query performance.

It should be noted that the writing of the photovoltaic data in the row storage format and the merging of the photovoltaic data in the row storage format file into the column storage format file may be separated from each other. Real-time photovoltaic data is normally written in the row storage format, and the photovoltaic data in the row storage format file is merged into the column storage format file in another thread, so that the writing is separated from the merging. In this way, the throughput can be greatly improved, to realize real-time storage of the massive data.

With the method for processing photovoltaic data according to the embodiment of the present disclosure, the written data is automatically filtered according to the timeline, and only the latest written data is retained. The written photovoltaic data is first written in the row storage format in order to reduce the writing cost. The row storage format file is regularly merged into the column storage format file based on the target data amount threshold, to achieve the automatic merging operation of the updated data, improving the efficiency and intelligence of processing the photovoltaic data, and also improving the data query efficiency.

In some embodiments, step 120 of writing to-be-written photovoltaic data in the current data write transaction into a row storage format file in a row storage format based on the request identification metadata may include:
performing a data deduplication process on the to-be-written photovoltaic data based on the request identification metadata;
determining a target file path corresponding to the to-be-written photovoltaic data based on a rowkey of the request identification metadata; and
writing the to-be-written photovoltaic data into the row storage format file in the row storage format based on the target file path.

In this embodiment, in order to execute the current data write transaction based on the request identification metadata, the to-be-written photovoltaic data in the current data write transaction is first subjected to a data deduplication process. It can be understood that there may be duplicate data in a batch of incremental data, so the to-be-written photovoltaic data is subjected to the data deduplication process, in order to avoid the writing of duplicate data and thus improve the efficiency and effectiveness of data writing.

In practices, the to-be-written photovoltaic data is subjected to the data deduplication process based on the rowkey of the request identification metadata.

The rowkey may be used as a primary key for retrieving a record.

In this embodiment, the target file path for the current data write transaction is obtained based on the rowkey of the request identification metadata, and the to-be-written photovoltaic data is written in the row storage format into a row storage format file in a partition corresponding to the target file path.

It should be noted that the storage of the to-be-written photovoltaic data can be implemented by the distributed file system (HDFS) storage, or the operation support system (OSS) storage, or storage of other cloud vendors. The data format is compatible with all database formats and has high flexibility.

In some embodiments, before performing a data deduplication process on the to-be-written photovoltaic data based on the request identification metadata, the method for processing photovoltaic data may further include:
constructing an resilient distributed dataset object based on the request identification metadata, where the resilient distributed dataset object is used for performing the deduplication process and a merge process on the to-be-written photovoltaic data.

A resilient distributed dataset (RDD) is an abstraction of distributed computing, representing the data to be processed. An RDD is a set of read-only partitions. The data is fragmented into several data fragments and stored in different nodes so that the data can be operated in parallel. Therefore, it is called a distributed dataset. The distributed dataset is preferably stored in the memory during computation. If the memory cannot store all the distributed dataset, a part of the distributed dataset is stored on a disk.

In this embodiment, the resilient distributed dataset object is constructed for the to-be-written photovoltaic data based on metadata information of the request identification metadata. The resilient distributed dataset object facilitates the execution of the subsequent deduplication process and the merge process. Moreover, the resilient distributed dataset is compatible to a Spark computing framework, making it more convenient to use.

The deduplication process refers to the removal of duplicate data from the to-be-written photovoltaic data. The merge process refers to the merging of the row storage format file into the column storage format file.

In some embodiments, after step 120 of writing to-be-written photovoltaic data in the current data write transaction into a row storage format file in a row storage format based on the request identification metadata and before step 130 of merging the photovoltaic data in the row storage format file into a column storage format file in a column storage mode, the method for processing photovoltaic data may further include:
generating a commit type file in metadata of the to-be-written photovoltaic data, where the commit type file is provided for a data query engine to perform data query.

In this embodiment, the to-be-written photovoltaic data is written into the row storage format file in the row storage format by executing the current data write transaction, and the commit type file is generated in the metadata of the to-be-written photovoltaic data. With the generated commit type file, the query engine can query the photovoltaic data written into the row storage format file.

In some embodiments, after step 130 of merging the photovoltaic data in the row storage format file into a column storage format file in a column storage mode, the method for processing photovoltaic data may further include:
synchronizing the row storage format file and the column storage format file to query engine metadata, where the query engine metadata is provided for a data query engine to perform data query.

In this embodiment, the row storage format file and the column storage format file are synchronized to the query engine metadata to achieve metadata synchronization. For query engines such as hive and presto, data query needs to be performed by using the query engine metadata. The query engine metadata is used to construct external tables for query.

In some embodiments, before step 110 of generating request identification metadata for starting a current data write transaction, the method for processing photovoltaic data may further include:
performing a rollback operation when it is determined that a previous data write transaction fails.

The rollback refers to an operation of restoring a program or data to a previous correct state when an error occurs in processing the program or data.

In this embodiment, when it is determined that the execution of the previous data write transaction fails, the data rollback operation of the previous data write transaction is triggered.

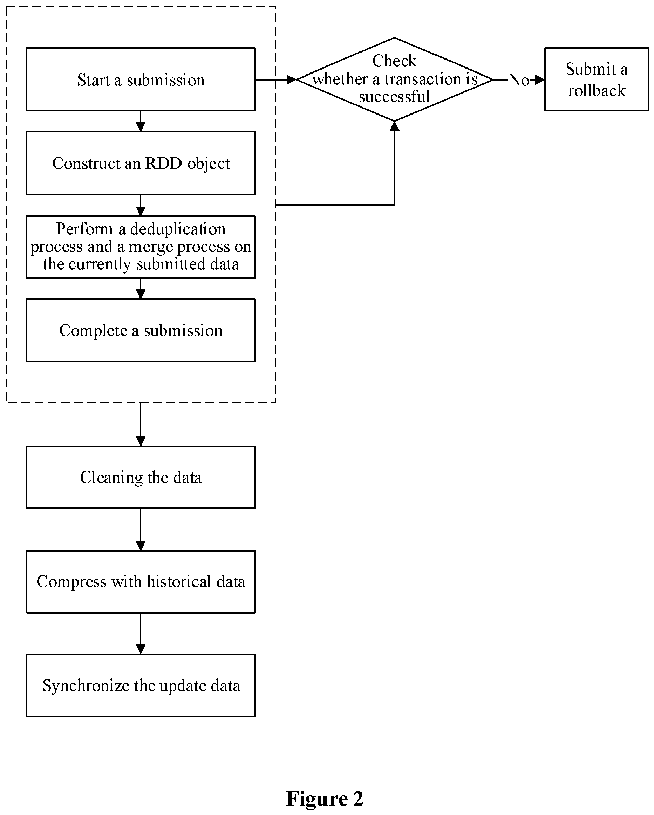

Referring to Figure 2, a specific embodiment is introduced below.

In Step 1, a submission is started.

It is determined whether the previous data write transaction fails. If the previous data write transaction fails, a rollback operation is triggered.

When it is determined the previous data write transaction is successfully executed, request identification metadata for starting a current data write transaction is generated based on a current time.

In Step 2, an RDD object is constructed.

The RDD object is constructed based on metadata information of the to-be-written photovoltaic data in a current data write transaction, to facilitate the execution of the subsequent data deduplication process and the merge process.

In step 3, data deduplication is performed.

The batch of incremental data, i.e., the to-be-written photovoltaic data, is subject to deduplicatation based on a primary key to avoid duplicate data being written into a table.

In Step 4, the data is merged.

A target file path of a current record is obtained based on the rowkey set in the request identification metadata, and the to-be-written photovoltaic data is written into a log file in a partition in the row storage format based on the target file path.

In Step 5, the submission is completed.

A commit type file is generated in metadata of the to-be-written photovoltaic data, based on which a query engine can query the metadata to obtain the to-be-written photovoltaic data that is upserted.

In Step 6, the data is compressed.

Data cleaning is performed on the submitted data and the data in the log file is merged into a parquet file based on a target data amount threshold to achieve compression with historical data.

In Step 7, metadata is synchronized.

The row storage format file and the column storage format file are synchronized to query engine metadata. For query engines such as hive and presto, a query is performed based on the query engine metadata.

In this embodiment, the written data is automatically filtered according to the timeline, and only the latest written data is retained. The written photovoltaic data is first written in the row storage format, in order to reduce the writing cost. The row storage format file is regularly merged into the column storage format file based on the target data amount threshold, to achieve the automatic merging operation of the updated data, improving the efficiency and intelligence of processing the photovoltaic data, and effectively improving data query efficiency.

For the method for processing photovoltaic data according to the embodiment of the present disclosure, the execute body may be an apparatus for processing photovoltaic data. In an embodiment of the present disclosure, an example of the apparatus for processing photovoltaic data is provided as follows.

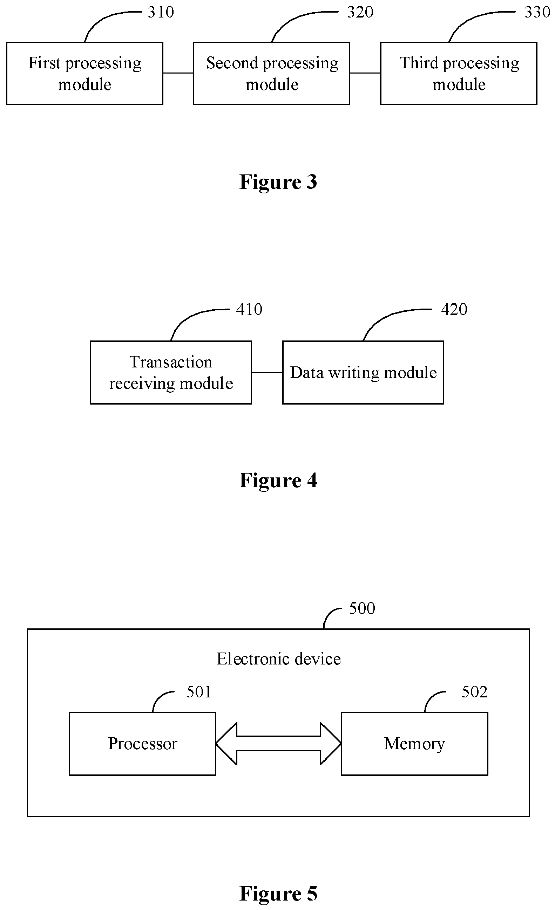

As shown in Figure 3, the apparatus for processing photovoltaic data includes a first processing module 310, a second processing module 320, and a third processing module 330.

The first processing module 310 is configured to generate request identification metadata for starting a current data write transaction based on a current time when it is determined that a previous data write transaction is successfully executed.

The second processing module 320 is configured to write to-be-written photovoltaic data in the current data write transaction into a row storage format file in a row storage format based on the request identification metadata.

The third processing module 330 is configured to merge the photovoltaic data in the row storage format file into a column storage format file in a column storage mode when it is determined that an amount of data written in the row storage format exceeds a target data amount threshold. The row storage format file and the column storage format file are used for data query.

With the apparatus for processing photovoltaic data according to the embodiment of the present disclosure, the written data is automatically filtered according to the timeline, and only the latest written data is retained. The written photovoltaic data is first written in the row storage format, in order to reduce the writing cost. The row storage format file is regularly merged into the column storage format file based on the target data amount threshold, to achieve the automatic merging operation of the updated data, improving the efficiency and intelligence of processing the photovoltaic data, and also improving the data query efficiency.

In some embodiments, the second processing module 320 is configured to perform a data deduplication process on the to-be-written photovoltaic data based on the request identification metadata;
determine a target file path corresponding to the to-be-written photovoltaic data based on a rowkey of the request identification metadata; and
write the to-be-written photovoltaic data into the row storage format file in the row storage format based on the target file path.

In some embodiments, the second processing module 320 is configured to construct a resilient distributed dataset object based on the request identification metadata, where the resilient distributed dataset object is used for performing the deduplication process and a merge process on the to-be-written photovoltaic data.

In some embodiments, the second processing module 320 is also configured to generate a commit type file in metadata of the to-be-written photovoltaic data, where the commit type file is provided for a data query engine to perform data query.

In some embodiments, the third processing module 330 is also configured to synchronize the row storage format file and the column storage format file to query engine metadata, where the query engine metadata is provided for a data query engine to perform data query.

In some embodiments, the first processing module 310 is also configured to perform a rollback operation when it is determined that the previous data write transaction fails.

The apparatus for processing photovoltaic data according to the embodiment of the present disclosure may be an electronic device or may be a component of the electronic device, such as an integrated circuit or a chip. The electronic device may be a terminal or other devices. For example, the electronic device may be a mobile phone, a tablet, a laptop, a handheld computer, an on-board electronic device, a Mobile Internet Device (MID), an Augmented Reality (AR)/Virtual Reality (VR) device, a robot, a wearable device, an ultra-mobile personal computer (UMPC), a netbook or a personal digital assistant (PDA) and so on, or may be a server, a Network Attached Storage (NAS), a personal computer (PC), a television (TV), a ATM, or a self-service machine and so on, which is not specifically limited in the embodiments of the present disclosure.

The apparatus for processing photovoltaic data in the embodiment of the present disclosure may be an apparatus with an operating system. The operating system may be an Android operating system, an IOS operating system, or any other possible operating systems, which is not specifically limited in the embodiment of the present disclosure.

The apparatus for processing photovoltaic data according to the embodiment of the present disclosure can achieve the various processes implemented in the method embodiment of Figures 1 and 2, which will not be repeated here.

A system for managing photovoltaic data is provided according to an embodiment of the present disclosure.

As shown in Figure 4, the system for managing photovoltaic data includes a transaction receiving module 410 and a data writing module 420.

In this embodiment, the transaction receiving module 410 is configured to receive a data writing transaction sent by a client, where the data writing transaction includes to-be-written photovoltaic data. The data writing module 420 is connected to the transaction receiving module 410, and the data writing module is used to execute the method for processing photovoltaic data described above to process the to-be-written photovoltaic data.

In practices, the data writing module 420 is used to generate request identification metadata for starting a current data write transaction based on a current time when it is determined that a previous data write transaction is successfully executed, write to-be-written photovoltaic data in the current data write transaction into a row storage format file in a row storage format based on the request identification metadata, and merge the photovoltaic data in the row storage format file into a column storage format file in a column storage mode when it is determined that an amount of data written in the row storage format exceeds a target data amount threshold.

In this embodiment, the data writing module 420 processes the data write transaction received by the transaction receiving module 410, achieving real-time storage of massive data and ensuring the security and integrity of the photovoltaic data.

With the system for managing the photovoltaic data according to the embodiment of the present disclosure, the written data is automatically filtered according to the timeline, and only the latest written data is retained. The written photovoltaic data is first written in the row storage format, in order to reduce the writing cost. The row storage format file is regularly merged into the column storage format file based on the target data amount threshold, to achieve the automatic merging operation of the updated data, improving the efficiency and intelligence of processing the photovoltaic data, and also improving data query efficiency.

In some embodiments, as shown in Figure 5, an electronic device 500 is also provided according to an embodiment of the present disclosure. The electronic device 500 includes a processor 501, a memory 502, and a computer program stored in the memory 502 and executable by the processor 501. The program, when executed by the processor 501, implements the various processes of the embodiment of the method for processing photovoltaic data described above and can achieve the same technical effect, which will not be repeated here.

It should be noted that the electronic device in the embodiment of the present disclosure can be the mobile electronic device or the non-mobile electronic device as described above.

A non-transitory computer readable storage medium storing a computer program is also provided according to an embodiment of the present disclosure. The program, when executed by a processor, implements the various processes of the embodiment of the method for processing photovoltaic data described above and can achieve the same technical effect, which will not be repeated here.

The processor is a processor of the electronic device described in the above embodiment. The readable storage medium includes a computer readable storage medium, such as a computer read-only memory (ROM), a random access memory (RAM), a magnetic disc or an optical disc.

A computer program product comprising a computer program is also provided according to an embodiment of the present disclosure. The program, when executed by a processor, implements the method for processing photovoltaic data described above.

The processor is a processor of the electronic device described in the above embodiment. The readable storage medium includes a computer readable storage medium, such as a computer read-only memory (ROM), a random access memory (RAM), a magnetic disc or an optical disc.

A chip is further provided according to an embodiment of the present disclosure. The chip includes a processor and a communication interface. The communication interface is coupled with the processor. The processor is used to run programs or instructions, to implement various processes of the embodiment of the method for processing photovoltaic data described above, and achieve the same technical effect, which will not be repeated here.

It should be understood that the chip mentioned in the embodiment of the present disclosure can also be referred to as a system level chip, a system chip, a chip system, a System-On-Chip, or the like.

It should be noted that the terms "including", "comprising" or any other variant thereof used herein are intended to be non-exclusive inclusion. A process, method, article or apparatus including a series of elements includes not only those elements, but also other elements not expressly listed, or elements inherent to the process, method, article or apparatus. Unless expressively limited otherwise, the element defined by the statement "comprising (including) a..." does not exclude the case that other similar elements may exist in the process, method, article or apparatus including the element. In addition, it should be pointed out that the scope of the methods and apparatuses in the embodiments of the present disclosure is not limited to performing functions in the order shown or discussed, but may also include performing functions in a substantially parallel manner or in the opposite order according to the involved functions. For example, the described methods may be executed in a different order from the described ones, and various steps may also be added, omitted, or combined. In addition, features described with reference to certain examples can be combined in other examples.

From the description of the above embodiments, it is clear to those skilled in the art that the method in the above embodiments may be implemented by software plus necessary common hardware platform or implemented by hardware. However, the method is preferably implemented by software plus necessary common hardware platform in most cases. Based on such an understanding, the technical solutions of the present disclosure essentially, or the part contributing to the related art may be embodied in the form of a computer software product. The computer software product is stored in a storage medium (for example, a ROM/RAM, a magnetic disk, or an optical disc), and includes several instructions for causing a terminal (which may be a mobile phone, a computer, a server, or a network device) to perform the method according to the embodiments of the present disclosure.

The embodiments of the present disclosure have been described above with reference to the drawings, but the present disclosure is not limited to the above-mentioned specific embodiments. The above-mentioned specific embodiments are only illustrative, not restrictive. Under the inspiration of the present disclosure, those of ordinary skill in the art can make many forms without departing from the purpose of the present disclosure and the scope of protection of the claims, all of which are within the protection of the present disclosure.

Any reference in this specification to "an embodiment", "some embodiment", "example", "specific embodiment" and "some example", etc. means that a particular feature, structure, material, or characteristic described in connection with the embodiment is included in at least one embodiment or example of the present disclosure. In the specification, the schematic expressions of the above terms do not necessarily refer to the same embodiment or example. Furthermore, the specific features, structures, materials or characteristics described may be combined in any one or more embodiments or examples in a suitable manner.

Although the embodiments of the present disclosure are shown and described, those skilled in the art should understand that various changes, modifications, substitutions and alterations may be made to these embodiments without departing from the principle and purpose of the present disclosure, and the scope of the present disclosure is defined by the claims and their equivalents.

## Claims

1. A method for processing photovoltaic data, comprising:
generating request identification metadata for starting a current data write transaction based on a current time when it is determined that a previous data write transaction is successfully executed;
writing to-be-written photovoltaic data in the current data write transaction into a row storage format file in a row storage format based on the request identification metadata; and
merging the photovoltaic data in the row storage format file into a column storage format file in a column storage mode when it is determined that an amount of data written in the row storage format exceeds a target data amount threshold, wherein the row storage format file and the column storage format file are used for data query.

2. The method for processing photovoltaic data according to claim 1, wherein the writing to-be-written photovoltaic data in the current data write transaction into a row storage format file in a row storage format based on the request identification metadata comprises:
performing a data deduplication process on the to-be-written photovoltaic data based on the request identification metadata;
determining a target file path corresponding to the to-be-written photovoltaic data based on a rowkey of the request identification metadata; and
writing the to-be-written photovoltaic data into the row storage format file in the row storage format based on the target file path.

3. The method for processing photovoltaic data according to claim 2, wherein before the performing a data deduplication process on the to-be-written photovoltaic data based on the request identification metadata, the method further comprises:
constructing an resilient distributed dataset object based on the request identification metadata, wherein the resilient distributed dataset object is used for performing the deduplication process and a merge process on the to-be-written photovoltaic data.

4. The method for processing photovoltaic data according to one of the previous claims, wherein after the writing to-be-written photovoltaic data in the current data write transaction into a row storage format file in a row storage format based on the request identification metadata, and before the merging the photovoltaic data in the row storage format file into a column storage format file in a column storage mode, the method further comprises:
generating a commit type file in metadata of the to-be-written photovoltaic data, wherein the commit type file is provided for a data query engine to perform data query.

5. The method for processing photovoltaic data according to any one of claims 1 to 4, wherein after the merging the photovoltaic data in the row storage format file into a column storage format file in a column storage mode, the method further comprises:
synchronizing the row storage format file and the column storage format file to query engine metadata, wherein the query engine metadata is provided for a data query engine to perform data query.

6. The method for processing photovoltaic data according to any one of one of the previous claims, wherein before the generating request identification metadata for starting a current data write transaction, the method further comprises:
performing a rollback operation when it is determined that the previous data write transaction fails.

7. An apparatus for processing photovoltaic data, comprising:
a first processing module, configured to generate request identification metadata for starting a current data write transaction based on a current time when it is determined that a previous data write transaction is successfully executed;
a second processing module, configured to write to-be-written photovoltaic data in the current data write transaction into a row storage format file in a row storage format based on the request identification metadata; and
a third processing module, configured to merge the photovoltaic data in the row storage format file into a column storage format file in a column storage mode when it is determined that an amount of data written in the row storage format exceeds a target data amount threshold, wherein the row storage format file and the column storage format file are used for data query.

8. A system for managing photovoltaic data, comprising:
a transaction receiving module configured to receive a data writing transaction sent by a client, wherein the data writing transaction comprises to-be-written photovoltaic data; and
a data writing module connected to the transaction receiving module, wherein the data writing module is configured to process the to-be-written photovoltaic data by the method for processing photovoltaic data according to any one of claims 1 to 6.

9. An electronic device, comprising a memory, a processor, and a computer program stored in the memory and executable by the processor, wherein the program, when executed by the processor, implements the method for processing photovoltaic data according to any one of claims 1 to 6.

10. A non-transitory computer-readable storage medium, storing a computer program, wherein the computer program, when executed by a processor, implements the method for processing photovoltaic data according to any one of claims 1 to 6.
